# EUROPEAN PATENT SPECIFICATION

(11) **EP 4 530 197 B1**
(45) Date of publication and mention of the grant of the patent: **05.08.2026**
(21) Application number: 23200509.0
(22) Date of filing: 28.09.2023
(51) Int. Cl.: B64D 37/12

(54) **AIRCRAFT FUSELAGE AND METHOD FOR RELEASING A FUEL TANK FROM INSIDE THE AIRCRAFT FUSELAGE IN CASE OF EMERGENCY AS WELL AS AIRCRAFT**
FLUGZEUGRUMPF UND VERFAHREN ZUM LÖSEN EINES KRAFTSTOFFTANKS AUS DEM INNEREN DES FLUGZEUGRUMPFES IM NOTFALL SOWIE FLUGZEUG
FUSELAGE D'AÉRONEF ET PROCÉDÉ DE LIBÉRATION D'UN RÉSERVOIR DE CARBURANT DE L'INTÉRIEUR DU FUSELAGE D'AÉRONEF EN CAS D'URGENCE AINSI QU'AÉRONEF

(43) Date of publication of application: 02.04.2025
(73) Proprietor: Airbus Operations GmbH, 21129 Hamburg (DE)
(72) Inventor: Hegenbart, Matthias, Hamburg (DE); Benthien, Hermann, Hamburg (DE)
(74) Representative: Isarpatent

(56) References cited:
- CN-A- 110 450 955
- FR-A- 500 076
- GB-A- 127 842
- RU-C2- 2 243 925
- US-A- 4 306 693

## Description

The invention relates to a device as well as to an aircraft fuselage for releasing a fuel tank from inside the aircraft fuselage in case of emergency. The invention is furthermore concerned with an aircraft containing such an aircraft fuselage and a method for releasing a fuel tank from inside an aircraft fuselage in case of emergency.

It is very often necessary, especially on long range flights, for an aircraft to carry an additional supply of fuel to that normally required and installed in the aircraft. Such an additional fuel is generally carried in additional tanks on the outside of the aircraft, or, more particularly, for convenience and aerodynamic reasons, may be attached to the lower surface of the wing section. These tanks can be released or dropped off, thus reducing the load and drag factor on the aircraft or for safety reasons.

Various types of jettisonable fuel tank arrangements are known. Most prior art types of jettisonable fuel tank arrangements have been so constructed and located with respect to the aircraft body or fuselage as to provide a generally aerodynamically smooth, streamlined outer surface to the aircraft.

Typically, the jettisonable fuel tank is connected to a reserve fuel tank means carried by the aircraft, and wherein the valve means serves to normally maintain open fuel flow communication between the jettisonable fuel tank and the engine of the aircraft.

For example, document US 4 306 693 A describes an improved fuel tank system for aircraft, and more particularly, to jettisonable fuel tank means and related self-sealing valve means therefor. This jettisonable fuel tank can be dropped when the contained fuel is consumed.

Furthermore, document CN 110 450 955 A describes an optimized structure for a stable endurance large-load unmanned aerial vehicle, wherein the unmanned aerial vehicle comprises a fuel tank that can be dropped after the fuel in the fuel tank is used up and, then, the fuel tank will fall off from the unmanned aerial vehicle, thereby reducing the weight of the unmanned aerial vehicle. Document RU 2 243 925 C2 describes an airplane with fuel packed in removable tanks, containing a fuselage, a supporting wing, power engines, a power system for power engines and a chassis, characterized in that behind the chassis and in front of the chassis the fuselage is made with a lower floor having compartments for placing removable tanks. In document GB 127 842 A, an aeroplane is described that can release the tank, which falls by gravity, and also some pressure device which assists in causing the tank to fall more rapidly, so that it may pass away from the machine with as little loss of time as possible. Moreover, document FR 500 076 A describes improvements to fuel containers.

Those known jettisonable fuel tanks have the problem that they are very difficult to be upgraded in existing aircrafts. Fuel tanks that are integrated in the aircraft cannot be released in case of emergency.

According to the invention, this problem is solved in each case by the subject matters of the independent claims.

According to a first aspect of the invention, an aircraft fuselage as set out in claim 1 is provided.

According to a second aspect of the invention, an aircraft comprising an aircraft fuselage according to the first aspect of the invention is provided. Furthermore, the aircraft comprises a fuel tank which is releasably secured by the mounting device in an inside, for example an inner tank compartment, of the outer structure.

According to a third aspect of the invention, a method as set out in claim 8 is provided.

A fundamental concept of the invention is to separate a fuel tank, in particular a liquid hydrogen tank, in case of emergency like a hydrogen leakage, which cannot be stopped. Removing the fuel tank from the aircraft automatically and moving it into a safe distance is enabled. It is emphasized that the present invention can be applied on ground as well as in flight. The fuel tank can be installed anywhere in the aircraft fuselage, for example in the front, in the middle, in the back or in a cargo compartment. In particular, the fuel tank is stored in an inner tank compartment of the outer structure separated from other areas of the aircraft fuselage. The mounting device or tank fitting, respectively, is integrated in the aircraft fuselage.

A system for the separation of the fuel tank, in particular a hydrogen tank separation system, is provided.

A particular advantage in the solution according to an aspect of the invention is that a fuel tank, which usually contains dangerous fluids that are easy flammable or explosive, for example, can operated more safely in an aircraft. When a problem with the fuel tank occurs that cannot be handled in the aircraft, the complete fuel tank can be removed from the aircraft to provide a safe further flight and/or landing.

Another advantage is that hydrogen can be stored in the fuel tank and used as fuel for the aircraft. Since liquid hydrogen can be explosive when combined with air, and only a small amount of energy is required to ignite the hydrogen, the present invention provides a solution to handle it safely, in particular in the event of an emergency.

Advantageous embodiments and further developments emerge from the description with reference to the figures.

According to some aspects of the invention, the openable release door is positioned on a bottom side of the outer structure. In particular such that the aircraft fuselage drops off the fuel tank by gravity. For example, the release door comprises two drop doors. The release door or the two drop doors, respectively, is located under the fuel tank.

According to the invention, the mounting device comprises an enclosure which encloses a shell surface of the fuel tank at least sectionwise. That means the shell surface is surrounded by the enclosure completely radially.

According to the invention, the enclosure comprises a reversible quick release element which locks the enclosure in a secured status and is driven electro mechanically, magnetically, hydraulically or pneumatically to open the enclosure. Therefore, the quick release element can be operated automatically and/or semi-automatically. For example, the quick release element is driven by a spindle drive. The quick release element can be located between the fuel tank and the release door. The quick release element releases the enclosure and thus the fuel tank is released.

For example, a hydrogen detection system can be positioned at or coupled to the mounting device and/or the release door that when a hydrogen leak is detected the hydrogen detection system may activate the quick release element and the release door. Furthermore, the quick release element and/or the release door can be activated or controlled by an activation system or a control and steering unit, respectively.

According to the invention, the enclosure comprises a plurality of chain links that are connected to each other by locking pins, wherein the reversible quick release element is configured as a reversible quick release pin connecting two of the plurality of chain links. The quick release pin can be driven by a spindle drive to unlock/release the two chain links which are connected by the quick release pin.

Not according to the claims, the enclosure is configured as a strap having at least two parts that are connected to each other by the reversible quick release element. For example, the strap can be configured like a belt.

Not according to the claims, the plurality of chain links can be combined with the strap, wherein the quick release element is provided to release the strap or the plurality of chain links. Further, the enclosure may comprise a bearing block, a rail or similar components for enclosing the fuel tank.

According to some further aspects of the invention, the openable release door is hinged to the outer structure and opened by a hydraulic, electro mechanical or pneumatic pivot mechanism, wherein a hinge axis of the hinged release door is substantially corresponding to a longitudinal axis of the aircraft fuselage. For example, the release door is configured as a conventional landing gear door, wherein its size and functionality is scalable to any demand. Such a demand could be being openable in great heights and/or a maximum flight speed.

Alternatively, the hinge axis of the hinged release door is substantially perpendicular to the longitudinal axis of the aircraft fuselage. The release door can be further equipped with a lock for locking the release door.

According to some further aspects of the invention, the openable release door is configured reclosable, in particular reclosable during flight. Thus, an aerodynamic property of the aircraft fuselage is not influenced by a protruding release door and/or an uncovered opening.

Optionally, at least a section of the aircraft fuselage can be lined with a fire resistant lining for blocking flames. Alternatively or additionally, at least a section of an inner side of the outer structure can comprise a flame deflector shielding.

According to some further aspects of the invention, the fuel tank is fluidly connected to a standard fueling and transfer line of the aircraft when secured by the mounting device. The fuel tank supplies an engine of the aircraft with fuel. The fuel tank can be configured as a cryogenic tank for storing hydrogen or other cryogenic fluids.

According to some further aspects of the invention, the aircraft further comprises a second fuel tank which is independent from the fuel tank and integrated into a wing of the aircraft.

Optionally, the aircraft can comprise a hybrid engine which is configured to be driven by different fuels that are supplied from the fuel tank and the second fuel tank via the standard fueling and transfer line. The fuel tank can store hydrogen and the second fuel tank can store kerosine, for example. Alternatively, the fuel tank and the second fuel tank can store the same fuel.

According to some further aspects of the invention, the method further comprises the step of closing the release door after the aircraft fuselage has released the fuel tank.

In particular, the release door is closed during flight with a regular flight speed or with a reduced flight speed. Furthermore, the release door can be closed in any desired altitude.

According to some further aspects of the invention, the aircraft fuselage drops off the fuel tank through the open release door by a gravity force. Thus, the fuel tank can separate downward away from the aircraft fuselage. The open release door may comprise two drop doors. The drop doors are driven in full open position, for instance.

Additionally, the step of disconnecting may comprise activating a shut off valve for fluidly closing the fuel tank and the standard fueling and transfer line.

According to some further aspects of the invention, the method further comprises the step of switching a fuel supply from the fuel tank to a second fuel tank which is independent from the fuel tank and not to be released.

The present invention is explained more specifically below on the basis of the exemplary embodiments indicated in the schematic figures, in which:
- Fig. 1: shows a schematic illustration of an aircraft fuselage for releasing a fuel tank from inside the aircraft fuselage in case of emergency according to an embodiment of the invention;
- Fig. 2: shows a schematic illustration of the aircraft fuselage according to Fig. 1 with an opened release door and a secured mounting device;
- Fig. 3: shows a schematic illustration of the aircraft fuselage according to Figs. 1 and 2 with an opened release door and a released mounting device;
- Fig. 4: shows a schematic illustration of the aircraft fuselage according to Figs. 1, 2 and 3 with a reclosed release door;
- Fig. 5: shows a schematic illustration of an aircraft according to a further embodiment of the invention;
- Fig. 6: shows a flow chart for a method for releasing a fuel tank from inside the aircraft fuselage in case of emergency according to a further embodiment of the invention.

The accompanying figures are intended to convey a further understanding of the embodiments of the invention. They illustrate embodiments and are used in conjunction with the description to explain principles and concepts of the invention. Other embodiments and many of the cited advantages emerge in light of the drawings. The elements of the drawings are not necessarily shown to scale in relation to one another. Direction-indicating terminology such as for example "at the top", "at the bottom", "on the left", "on the right", "above", "below", "horizontally", "vertically", "at the front", "at the rear" and similar statements are merely used for explanatory purposes and do not serve to restrict the generality to specific configurations as shown in the figures.

In the figures of the drawing, elements, features and components that are the same, have the same function and have the same effect are each provided with the same reference signs - unless explained otherwise.

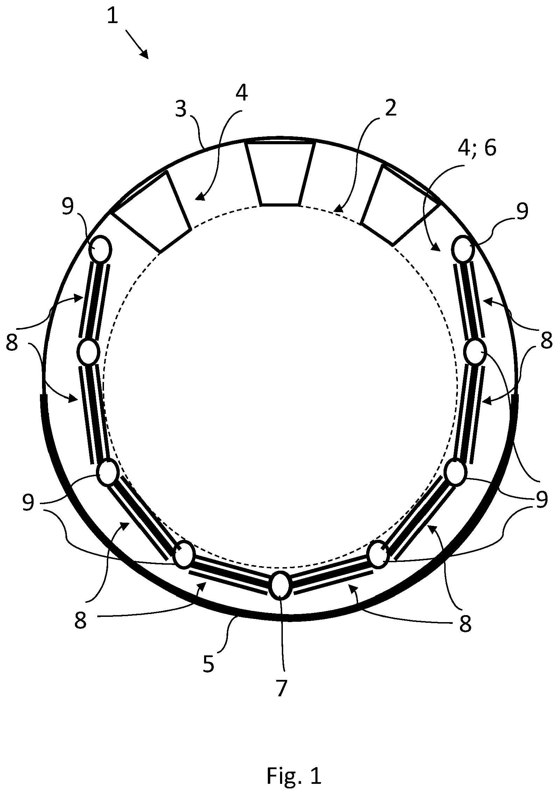

Figs. 1, 2, 3 and 4 show a schematic illustration of an aircraft fuselage 1 for releasing a fuel tank 2 from inside the aircraft fuselage 1 in case of emergency according to an embodiment of the invention.

The aircraft fuselage 1 comprises an outer structure 3, a mounting device 4, an openable release door 5, an enclosure 6 and a reversible quick release element 7. The outer structure 3 can include a frame and a stringer.

The mounting device 4 or tank fitting, respectively, is configured to releasably secure a fuel tank 2 in an inside, in particular an inner tank compartment, of the outer structure 3. The tank fitting 4 comprises the enclosure 6 which encloses a shell surface of the fuel tank 2 at least sectionwise, here the lower and lateral section. Furthermore, the tank fitting 4 comprises three pads. The upper section of the fuel tank 2 is enclosed sectionwise by the three pads.

Moreover, the enclosure 6 comprises the reversible quick release element 7 which locks the enclosure 6 in a secured status and is driven electro mechanically, or hydraulically to open the enclosure 6. Therefore, the quick release element 7 can be operated semi-automatically. For example, a hydrogen detection system (not shown) can be positioned at or coupled to the tank fitting 4 and/or the release door 5 that when a hydrogen leak is detected the hydrogen detection system may activate a signal for informing a pilot. The quick release element 7 and the release door 5 can be activated by the pilot. After activation by the pilot the fuel tank 2 is automatically released through the release door 5.

Exemplarily, the enclosure 6 comprises a plurality of chain links 8 and a plurality of locking pins 9. The plurality of chain links 8 are connected to each other by the locking pin 9. The reversible quick release element 7 is configured as a reversible quick release pin connecting two of the plurality of chain links 8. Here, the quick release pin 7 is arranged at the lowest point of the tank fitting 4. In other words, the quick release pin 7 is arranged in the middle of the release door 5, for example.

The openable release door 5 separates the inner tank compartment from an outside of the outer structure 3. Here, the release door 5 consists of two door parts. The two door parts can be configured as a double door. The release door 5 is positioned in relation to the mounting device 4 such that the fuel tank is released through the release door 5 when the mounting device 4 releases the fuel tank 2. Exemplarily, the two door parts form a quarter of the aircraft fuselage 1 each. Thus, the release door 5 extends over the lower half of the aircraft fuselage 1 with regard to a cross-section view.

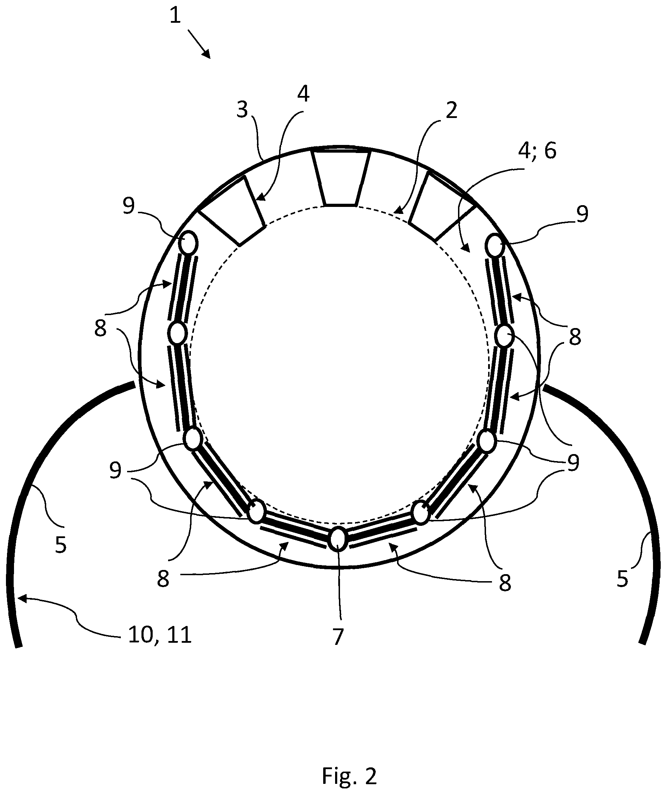

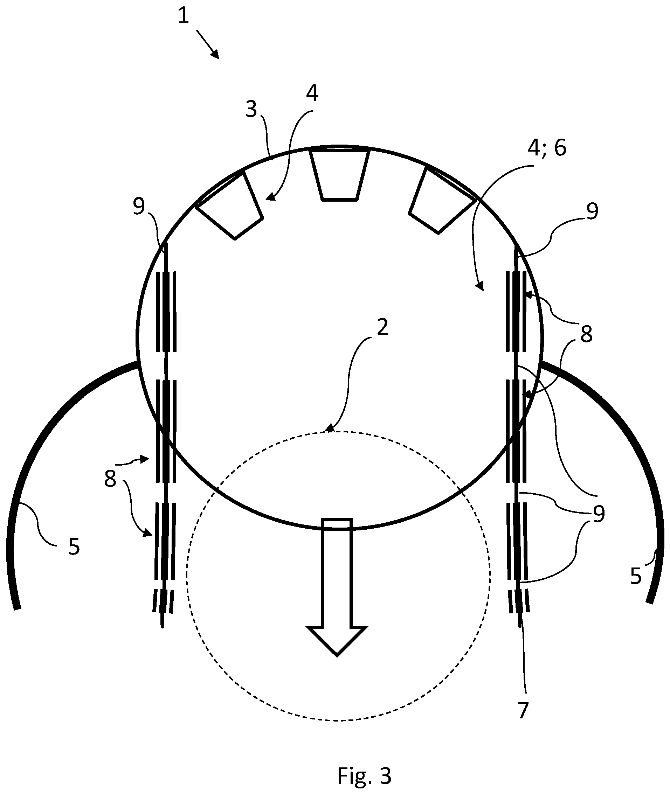

Here, the openable release door 5 is positioned on a bottom side 3a of the outer structure 3, in Fig. 2 and 3 it corresponds to the lower side of the outer structure 3, such that the aircraft fuselage 1 drops off the fuel tank 2 by gravity. Thereby, the openable release door 5 is hinged to the outer structure 3 and opened by a hydraulic pivot mechanism. In Figs. 2 and 3, the release door 5 is illustrated in a fully open status. A hinge axis of the hinged release door 5 is substantially corresponding to the longitudinal axis of the aircraft fuselage 1. In particular, the release door 5 is configured as a conventional landing gear door, wherein its size and functionality is scalable to any demand. In this example, the release door 5 is hinged at an upper section of the release door 5 such that the release door 5 opens sidewards.

In Fig. 2 the aircraft fuselage 1 is schematically illustrated with an opened release door 5 and a secured mounting device 4. The aircraft fuselage 1 of Fig. 2 differs from the aircraft fuselage 1 of Fig. 1 in that a section of the aircraft fuselage 1 is lined with a fire resistant lining 10 for retaining flames and a section of an inner side of the outer structure 3 comprises a flame deflector shielding 11. In particular, these section correspond to an inner side of the first 5 and second release door 9 as well as the walls that surround the fuel tank 2, for example the inner walls of the inner tank compartment.

Fig. 3 shows the aircraft fuselage 1 according to Figs. 1 and 2 with an opened release door 5 and a released tank fitting 4.

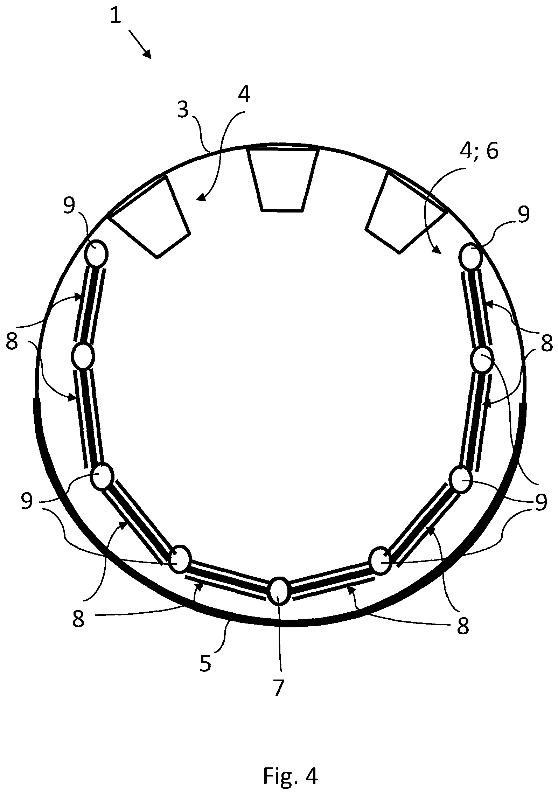

The openable release door 5 is configured reclosable, in particular reclosable during flight. Thus, an aerodynamic property of the aircraft fuselage 1 is not influenced by a protruding release door 5 and/or an uncovered opening as it is present in Figs. 2 and 3. In Fig. 4 the aircraft fuselage according to Figs. 1, 2 and 3 is shown with a reclosed release door 5.

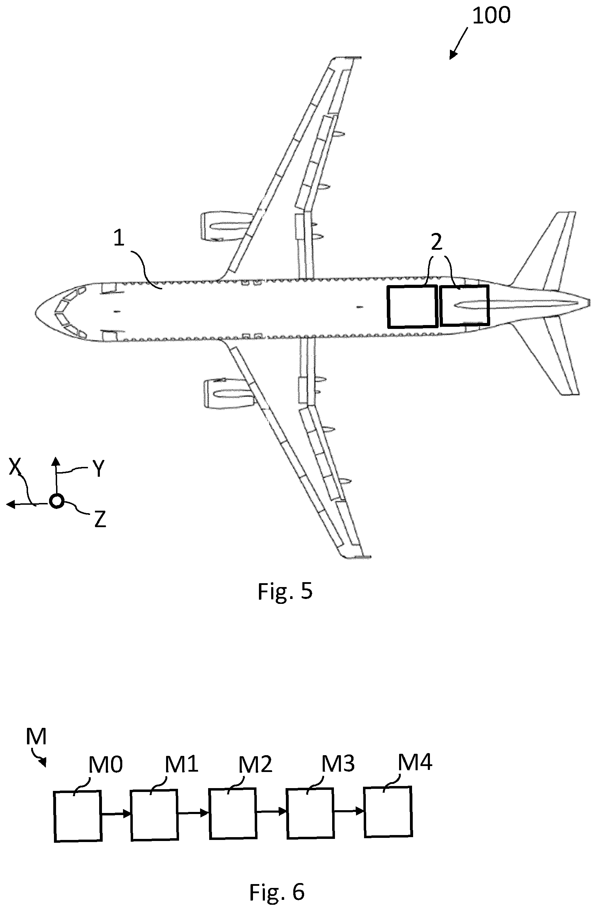

Fig. 5 shows a schematic illustration of an aircraft 100 according to a further embodiment of the invention. Specifically, the aircraft 100 is configured as a passenger or cargo aircraft.

The aircraft 100 comprises an aircraft fuselage, in particular an aircraft fuselage 1 according to Fig. 1, 2, 3 or 4, and two fuel tanks 2. Each fuel tank 2 is releasably secured by the mounting device 4 in an inside, in particular in an inner tank compartment, of the outer structure 3. The openable releasable door 5 is located on a bottom side of the aircraft fuselage 1.

Here, the aircraft 100 comprises two fuel tanks 2 but is not limited to that number. The aircraft 100 can also comprise one, three or more fuel tanks 2. For example, the three or more fuel tanks are arranged behind each other and/or next to each other such that each fuel tank 2 can be released from the aircraft fuselage 1 individually.

The two fuel tanks 2 are fluidly connected to a standard fueling and transfer line of the aircraft 100 when secured by the mounting device 4. The two fuel tanks supply an engine of the aircraft 100 with fuel. The fuel can be kerosene or hydrogen, for example. Therefore, the fuel tank may be configured as a cryogenic tank for storing hydrogen.

Further, the aircraft 100 comprises a second fuel tank which is independent from the two fuel tanks and integrated into a wing of the aircraft 100. The second fuel tank is configured for storing kerosene, for example. The two fuel tanks 2 can store hydrogen and the second fuel tank can store kerosene, for example. Alternatively, the two fuel tanks and the second fuel tank store the same fuel.

Fig. 6 shows a flow chart for a method M for releasing a fuel tank from inside the aircraft fuselage in case of emergency according to a further embodiment of the invention. In particular, the fuel tank 2 is released from inside the aircraft fuselage 1 according to Fig. 1, 2, 3 or 4.

The method M comprises the steps of detecting M0, switching M1, opening M2, disconnecting M3 and closing M4.

The method M could start with detecting M0 a leakage of the fuel tank 2. The leakage can be detected by a user or a hydrogen detection system positioned at or coupled to the fuel tank 2.

In the optional step of switching M1 a fuel supply from the fuel tank 2 is switched to a second fuel tank which is independent from the fuel tank 2. Thereby, the second fuel tank is not to be released. Of course, the fuel supply does not need to be switched from the fuel tank 2 to the second fuel tank when the fuel tank 2 does not supply fuel at the moment of starting the method M.

In the step of opening M2 a release door 5 is opened. The release door 5 separates an inside from an outside of an outer structure 3 of the aircraft fuselage 1. For example, the hydrogen detection system may activate the quick release element and the release door. Furthermore, the quick release element and/or the release door can be activated or controlled by an activation system or a control and steering unit, respectively.

In the step of disconnecting M3 the fuel tank 2 is disconnected. The fuel tank 2 is releasably secured by a mounting device 4 in the inside of the outer structure 3 from the mounting device 4 such that the aircraft fuselage 1 releases the fuel tank 2 through the open release door 5. In particular, the aircraft fuselage 1 drops off the fuel tank 2 through the open release door 5 by a gravity force. Thus, the fuel tank 2 can separate downward away from the aircraft fuselage 1.

In the further step of closing M4 the release door 5 is re-closed after the aircraft fuselage 1 has released the fuel tank 2. In particular, the release door 5 is closed during flight with a regular flight speed. Furthermore, the release door 5 can be closed in any desired altitude. Therefore, a drive mechanism of the release door 5 is designed to overcome the higher loads.

In the detailed description above, various features have been combined in one or more examples in order to improve the rigorousness of the illustration. However, it should be clear in this case that the above description is of merely illustrative but in no way restrictive nature. It serves to cover all alternatives, modifications and equivalents of the various features and exemplary embodiments. Many other examples will be immediately and directly clear to a person skilled in the art on the basis of his knowledge in the art in consideration of the above description.

The exemplary embodiments have been chosen and described in order to be able to present the principles underlying the invention and their application possibilities in practice in the best possible way. As a result, those skilled in the art can optimally modify and utilize the invention and its various exemplary embodiments with regard to the intended purpose of use. In the claims and the description, the terms "including" and "having" are used as neutral linguistic concepts for the corresponding terms "comprising". Furthermore, use of the terms "a", "an" and "one" shall not in principle exclude the plurality of features and components described in this way.

While at least one exemplary embodiment of the present invention(s) is disclosed herein, it should be understood that modifications, substitutions and alternatives may be apparent to one of ordinary skill in the art and can be made without departing from the scope of the appended claims. This disclosure is intended to cover any adaptations or variations of the exemplary embodiment(s). In addition, in this disclosure, the terms "comprise" or "comprising" do not exclude other elements or steps, the terms "a" or "one" do not exclude a plural number, and the term "or" means either or both. Furthermore, characteristics or steps which have been described may also be used in combination with other characteristics or steps and in any order unless the disclosure or context suggests otherwise.

### Reference list

- 1: device
- 2: fuel tank
- 3: outer structure
- 3a: bottom side
- 4: mounting device
- 5: release door
- 6: enclosure
- 7: reversible quick release element
- 8: plurality of chain links
- 9: locking pin
- 10: fire resistant lining
- 11: flame deflector shielding

- 100: aircraft
- X: longitudinal axis

- M: method
- M0: detecting
- M1: switching
- M2: opening
- M3: disconnecting
- M4: closing

## Claims

1. Aircraft fuselage (1) for releasing a fuel tank (2) from inside the aircraft fuselage (1) in case of emergency, the aircraft fuselage (1) comprising:
an outer structure (3);
a mounting device (4) which is configured to releasably secure a fuel tank (2) in an inside of the outer structure (3), wherein the mounting device (4) comprises an enclosure (6) which encloses a shell surface of the fuel tank (2) at least sectionwise, wherein the enclosure (6) comprises a reversible quick release element (7) which locks the enclosure (6) in a secured status and is driven electro mechanically, magnetically, hydraulically or pneumatically to open the enclosure (6);
an openable release door (5) which separates the inside from an outside of the outer structure (3), wherein the release door (5) is positioned in relation to the mounting device (4) such that the fuel tank is released through the release door (5) when the mounting device (4) releases the fuel tank (2), **characterised in that** the enclosure (6) comprises a plurality of chain links (8) that are connected to each other by a respective locking pin (9), and **in that** the reversible quick release element (7) is configured as a reversible quick release pin connecting two of the plurality of chain links (8).

2. Aircraft fuselage (1) according to claim 1, wherein the openable release door (5) is positioned on a bottom side (3a) of the outer structure (3).

3. Aircraft fuselage (1) according to one of the preceding claims, wherein the openable release door (5) is hinged to the outer structure (3) and opened by a hydraulic, electro mechanical or pneumatic pivot mechanism, wherein a hinge axis of the hinged release door is substantially corresponding to a longitudinal axis (X) of the aircraft fuselage (1).

4. Aircraft fuselage (1) according to one of the preceding claims, wherein the openable release door (5) is configured reclosable, in particular reclosable during flight.

5. Aircraft (100), in particular passenger or cargo aircraft, comprising:
an aircraft fuselage (1) according to one of the preceding claims; and
a fuel tank (2) which is releasably secured by the mounting device (4) in an inside of the outer structure (3).

6. Aircraft (100) according to claim 5, wherein the fuel tank (2) is fluidly connected to a standard fueling and transfer line of the aircraft (100) when secured by the mounting device (4).

7. Aircraft (100) according to claim 5 or 6, further comprising a second fuel tank which is independent from the fuel tank (2) and integrated into a wing of the aircraft (100).

8. Method (M) for releasing a fuel tank (2) from inside of an aircraft fuselage in case of emergency, the method (M) comprising the steps of:
Opening (M2) a release door (5) which separates an inside from an outside of an outer structure (3) of an aircraft fuselage (1);
Disconnecting (M3) a fuel tank (2) which is releasably secured by a mounting device (4) in the inside of the outer structure (3) from the mounting device (4) such that the aircraft fuselage (1) releases the fuel tank (2) through the open release door (5), wherein the mounting device (4) comprises an enclosure (6) which encloses a shell surface of the fuel tank (2) at least sectionwise, wherein the enclosure (6) comprises a reversible quick release element (7) which locks the enclosure (6) in a secured status and is driven electro mechanically, magnetically, hydraulically or pneumatically to open the enclosure (6), **characterised in that** the enclosure (6) comprises a plurality of chain links (8) that are connected to each other by a respective locking pin (9), and **in that** the reversible quick release element (7) is configured as a reversible quick release pin connecting two of the plurality of chain links (8).

9. Method (M) according to claim 8, further comprising the step of closing (M4) the release door (5) after the aircraft fuselage (1) has released the fuel tank (2).

10. Method (M) according to claim 8 or 9, wherein the aircraft fuselage (1) drops off the fuel tank (2) through the open release door (5) by a gravity force.

11. Method (M) according to one of the claims 8 to 10, further comprising the step of switching (M1) a fuel supply from the fuel tank (2) to a second fuel tank which is independent from the fuel tank (2) and not to be released.

## Patentansprüche

1. Flugzeugrumpf (1) zum Freigeben eines Treibstofftanks (2) aus einem Inneren des Flugzeugrumpfes (1) in einem Notfall, wobei der Flugzeugrumpf (1) Folgendes umfasst:
eine Außenstruktur (3);
eine Montagevorrichtung (4), die dazu ausgebildet ist, einen Treibstofftank (2) freigebbar in einem Inneren der Außenstruktur (3) zu befestigen, wobei die Montagevorrichtung (4) ein Gehäuse (6) umfasst, das eine Mantelfläche des Treibstofftanks (2) zumindest abschnittsweise umschließt, wobei das Gehäuse (6) ein reversibles Schnelllöseelement (7) umfasst, welches das Gehäuse (6) in einem befestigten Zustand verriegelt und zum Öffnen des Gehäuses (6) elektromechanisch, magnetisch, hydraulisch oder pneumatisch angetrieben wird;
und
eine öffenbare Freigabeklappe (5), die das Innere von einer Außenseite der Außenstruktur (3) trennt, wobei die Freigabeklappe (5) in Relation zu der Montagevorrichtung (4) so positioniert ist, dass der Treibstofftank durch die Freigabeklappe (5) freigegeben wird, wenn die Montagevorrichtung (4) den Treibstofftank (2) freigibt,
**dadurch gekennzeichnet, dass** das Gehäuse (6) mehrere Kettenglieder (8) umfasst, die durch einen jeweiligen Verriegelungsstift (9) miteinander verbunden sind, und dadurch, dass das reversible Schnelllöseelement (7) als ein reversibler Schnelllösestift ausgebildet ist, der zwei der mehreren Kettenglieder (8) verbindet.

2. Flugzeugrumpf (1) nach Anspruch 1, wobei die öffenbare Freigabeklappe (5) auf einer Unterseite (3a) der Außenstruktur (3) positioniert ist.

3. Flugzeugrumpf (1) nach einem der vorhergehenden Ansprüche, wobei die öffenbare Freigabeklappe (5) an der Außenstruktur (3) angelenkt ist und durch einen hydraulischen, elektromechanischen oder pneumatischen Schwenkmechanismus geöffnet wird, wobei eine Scharnierachse der angelenkten Freigabeklappe im Wesentlichen einer Längsachse (X) des Flugzeugrumpfes (1) entspricht.

4. Flugzeugrumpf (1) nach einem der vorhergehenden Ansprüche, wobei die öffenbare Freigabeklappe (5) wiederverschließbar, insbesondere während eines Fluges wiederverschließbar, ausgebildet ist.

5. Flugzeug (100), insbesondere Passagier- oder Frachtflugzeug, umfassend:
einen Flugzeugrumpf (1) nach einem der vorhergehenden Ansprüche; und
einen Treibstofftank (2), der durch die Montagevorrichtung (4) in einem Inneren der Außenstruktur (3) freigebbar befestigt ist.

6. Flugzeug (100) nach Anspruch 5, wobei der Treibstofftank (2) mit einer Standard-Betankungs- und - Transferleitung des Flugzeugs (100) fluidisch verbunden ist, wenn er durch die Montagevorrichtung (4) befestigt ist.

7. Flugzeug (100) nach Anspruch 5 oder 6, ferner umfassend einen zweiten Treibstofftank, der von dem Treibstofftank (2) unabhängig und in einen Flügel des Flugzeugs (100) integriert ist.

8. Verfahren (M) zum Freigeben eines Treibstofftanks (2) aus einem Inneren eines Flugzeugrumpfes in einem Notfall, wobei das Verfahren (M) die folgenden Schritte umfasst:
Öffnen (M2) einer Freigabeklappe (5), die ein Inneres von einer Außenseite einer Außenstruktur (3) eines Flugzeugrumpfes (1) trennt;
Trennen (M3) eines Treibstofftanks (2), der durch eine Montagevorrichtung (4) im Inneren der Außenstruktur (3) freigebbar befestigt ist, von der Montagevorrichtung (4), so dass der Flugzeugrumpf (1) den Treibstofftank (2) durch die offene Freigabeklappe (5) freigibt, wobei die Montagevorrichtung (4) ein Gehäuse (6) umfasst, das eine Mantelfläche des Treibstofftanks (2) zumindest abschnittsweise umschließt, wobei das Gehäuse (6) ein reversibles Schnelllöseelement (7) umfasst, welches das Gehäuse (6) in einem befestigten Zustand verriegelt und zum Öffnen des Gehäuses (6) elektromechanisch, magnetisch, hydraulisch oder pneumatisch angetrieben wird, **dadurch gekennzeichnet, dass**
das Gehäuse (6) mehrere Kettenglieder (8) umfasst, die durch einen jeweiligen Verriegelungsstift (9) miteinander verbunden sind, und dadurch, dass das reversible Schnelllöseelement (7) als ein reversibler Schnelllösestift ausgebildet ist, der zwei der mehreren Kettenglieder (8) verbindet.

9. Verfahren (M) nach Anspruch 8, ferner umfassend den Schritt Schließen (M4) der Freigabeklappe (5), nachdem der Flugzeugrumpf (1) den Treibstofftank (2) freigegeben hat.

10. Verfahren (M) nach Anspruch 8 oder 9, wobei der Flugzeugrumpf (1) den Treibstofftank (2) durch eine Schwerkraft durch die offene Freigabeklappe (5) abwirft.

11. Verfahren (M) nach einem der Ansprüche 8 bis 10, ferner umfassend den Schritt Umschalten (M1) einer Treibstoffversorgung von dem Treibstofftank (2) zu einem zweiten Treibstofftank, der von dem Treibstofftank (2) unabhängig ist und nicht freigegeben werden soll.

## Revendications

1. Fuselage (1) d'aéronef pour libérer un réservoir de carburant (2) de l'intérieur du fuselage (1) de l'aéronef en cas d'urgence, le fuselage (1) d'aéronef comprenant :
une structure extérieure (3) ;
un dispositif de montage (4) conçu pour fixer de manière amovible un réservoir de carburant (2) à l'intérieur de la structure extérieure (3), le dispositif de montage (4) comprenant une enceinte (6) qui entoure au moins par sections une surface d'enveloppe du réservoir de carburant (2), l'enceinte (6) comprenant un élément réversible à libération rapide (7) qui verrouille l'enceinte (6) dans un état sécurisé et est entraîné de façon électromécanique, magnétique, hydraulique ou pneumatique pour ouvrir l'enceinte (6) ;
et
une porte de libération (5) ouvrante qui sépare l'intérieur d'un extérieur de la structure extérieure (3), la porte de libération (5) étant positionnée par rapport au dispositif de montage (4) de telle sorte que le réservoir de carburant est libéré par la porte de libération (5) lorsque le dispositif de montage (4) libère le réservoir de carburant (2),
**caractérisé en ce que** l'enceinte (6) comprend une pluralité de maillons de chaîne (8) qui sont reliés les uns aux autres par une broche de verrouillage (9) respective, et **en ce que** l'élément réversible de libération rapide (7) est réalisé sous la forme d'une broche réversible de libération rapide reliant deux de la pluralité de maillons de chaîne (8).

2. Fuselage (1) d'aéronef selon la revendication 1, dans lequel la porte de libération (5) ouvrante est positionnée sur un côté inférieur (3a) de la structure extérieure (3).

3. Fuselage (1) d'aéronef selon l'une des revendications précédentes, dans lequel la porte de libération (5) ouvrante est articulée sur la structure extérieure (3) et ouverte par un mécanisme de pivotement hydraulique, électromécanique ou pneumatique, dans lequel un axe d'articulation de la porte de libération articulée correspond sensiblement à un axe longitudinal (X) du fuselage (1) d'aéronef.

4. Fuselage (1) d'aéronef selon l'une des revendications précédentes, dans lequel la porte de libération (5) ouvrante est configurée pour pouvoir être refermée, en particulier pour pouvoir être refermée en vol.

5. Aéronef (100), en particulier aéronef de passagers ou de fret, comprenant :
un fuselage (1) d'aéronef selon l'une des revendications précédentes ; et
un réservoir de carburant (2) fixé de manière amovible par le dispositif de montage (4) à l'intérieur de la structure extérieure (3).

6. Aéronef (100) selon la revendication 5, dans lequel le réservoir de carburant (2) est en liaison fluidique avec une ligne de ravitaillement et de transfert standard de l'aéronef (100) lorsqu'il est fixé par le dispositif de montage (4).

7. Aéronef (100) selon la revendication 5 ou 6, comprenant en outre un second réservoir de carburant indépendant du réservoir de carburant (2) et intégré dans une aile de l'aéronef (100).

8. Procédé (M) de libération d'un réservoir (2) de l'intérieur d'un fuselage d'aéronef en cas d'urgence, le procédé (M) comprenant les étapes suivantes :
l'ouverture (M2) d'une porte de libération (5) qui sépare un intérieur d'un extérieur d'une structure extérieure (3) d'un fuselage (1) d'aéronef ;
le retrait (M3) d'un réservoir de carburant (2) qui est fixé de manière amovible par un dispositif de montage (4) à l'intérieur de la structure extérieure (3) du dispositif de montage (4) de sorte que le fuselage (1) d'aéronef libère le réservoir de carburant (2) par la porte de libération (5) ouverte, le dispositif de montage (4) comprenant une enceinte (6) qui entoure au moins par sections une surface d'enveloppe du réservoir de carburant (2), dans lequel l'enceinte (6) comprend un élément réversible de libération rapide (7) qui verrouille l'enceinte (6) dans un état sécurisé et est entraîné de façon électromécanique, magnétique, hydraulique ou pneumatique pour ouvrir l'enceinte (6),
**caractérisé en ce que**
l'enceinte (6) comprend une pluralité de maillons de chaîne (8) qui sont reliés les uns aux autres par une broche de verrouillage (9) respective, et **en ce que** l'élément réversible de libération rapide (7) est réalisé sous la forme d'une broche réversible de libération rapide reliant deux de la pluralité de maillons de chaîne (8).

9. Procédé (M) selon la revendication 8, comprenant en outre l'étape de fermeture (M4) de la porte de libération (5) après que le fuselage (1) d'aéronef a libéré le réservoir de carburant (2).

10. Procédé (M) selon la revendication 8 ou 9, dans lequel le fuselage (1) d'aéronef fait tomber le réservoir de carburant (2) par une force de gravité à travers la porte de libération (5) ouverte.

11. Procédé (M) selon l'une des revendications 8 à 10, comprenant en outre l'étape de commutation (M1) d'une alimentation en carburant du réservoir de carburant (2) vers un second réservoir de carburant qui est indépendant du réservoir de carburant (2) et ne doit pas être libéré.
